# FASCICULE DE BREVET EUROPEEN

(11) **EP 1 031 645 B1**
(45) Date de publication et mention de la délivrance du brevet: **25.01.2006**
(21) Numéro de dépôt: 00810147.9
(22) Date de dépôt: 22.02.2000
(51) Int. Cl.: C25B 11/04, C25B 11/12, C02F 1/461

(54) **Cellule d'electrolyse a electrode bipolaire**
Elektrolysezelle mit einer bipolaren Elektrode
Electrolysis cell with a bipolar electrode

(30) Priorité: 25.02.1999 FR 9902482
(43) Date de publication de la demande: 30.08.2000
(73) Titulaire: CSEM Centre Suisse d'Electronique et de Microtechnique SA, 2007 Neuchâtel (CH)
(72) Inventeur: Hänni, Werner, 2034 Peseux (CH); Perret, André, 2206 Les Geneveys-sur-Coffrance (CH); Comninellis, Christos, 1031 Mex (CH)
(74) Mandataire: GLN

(56) Documents cités:
- US-A- 4 203 821
- US-A- 4 517 067
- US-A- 5 254 226
- US-A- 5 399 247
- US-A- 5 776 323
- RAMESHAM R ET AL: "Cyclic voltammetric, a.c. and d.c. polarization behavior of boron -doped CVD diamond" THIN SOLID FILMS, vol. 300, no. 1-2, 28 mai 1997 (1997-05-28), pages 144-153-153, XP004085167 ISSN: 0040-6090

## Description

La présente invention concerne une cellule d'électrolyse à électrode bipolaire, c'est-à-dire une cellule dans laquelle l'anode et la cathode sont séparées par au moins une troisième électrode, dite électrode bipolaire, formant elle-même à la fois une anode et une cathode. On comprend aisément que la présence d'une telle électrode permet d'augmenter la surface de réaction électrochimique et, de ce fait, l'efficacité de la cellule.

Pour plus de détails sur les cellules d'électrolyse à électrode(s) bipolaire(s), on pourra se référer, par exemple, à la publication de Ch. Comninellis et al. dans Journal of applied electrochemistry, 21 (1991) 415-418.

Pour qu'une électrode bipolaire puisse assurer sa fonction, il est impératif qu'elle soit réalisée en un matériau compatible à la fois avec la fonction d'anode et celle de cathode. Dans l'état actuel de la technique, le nickel, le cuivre et le plomb sont généralement utilisés.

Une application intéressante des électrodes bipolaires est leur intégration dans des cellules d'électrolyse destinées à la dépollution d'eaux usées par une oxydation des contaminants qu'elles contiennent. Certains composés organiques non biodégradables peuvent ainsi être décomposés. Une telle approche présente toutefois deux inconvénients. D'une part, les électrodes utilisées jusqu'ici ont tendance à s'user rapidement. D'autre part, elles libèrent des métaux, notamment des métaux lourds qui sont des polluants.

Il a également été proposé de réaliser des électrodes bipolaires en platine, mais elles ont l'inconvénient de s'user assez rapidement. Or, ce métal est très coûteux.

Les électrodes bipolaires peuvent se présenter soit sous forme de plaques, soit sous forme d'une pluralité de billes ayant, typiquement, un diamètre compris entre 0,5 et 10mm, maintenues en suspension dans l'électrolyte en mouvement, comme proposé, par exemple, par M. Fleischmann et al. dans Journal of Electrochemical Society, Vol. 116, No 11, Nov. 1969.

Malheureusement, la durée de vie de ces billes conductrices, généralement réalisées en cuivre ou en graphite, est assez réduite en raison des effets mécaniques dus à leur agitation dans l'électrolyte et de la dissolution, respectivement oxydation, du matériau lui-même. Les cellules d'électrolyse comportant de telles électrodes nécessitent donc une surveillance quasi permanente. De ce fait, elles ne peuvent que difficilement être utilisées dans des applications telles que la dépollution des eaux.

Le but principal de la présente invention est de proposer une cellule d'électrolyse à électrode bipolaire présentant la double particularité d'avoir une longue durée de vie et de ne pas libérer de produit polluant dans l'électrolyte.

De façon plus précise, l'invention concerne une cellule d'électrolyse comportant une anode, une cathode et au moins une électrode bipolaire disposée entre l'anode et la cathode, caractérisée en ce que cette électrode bipolaire comporte un substrat et une couche compacte de diamant rendu conducteur par un dopant et recouvrant le substrat.

Avantageusement, l'anode et la cathode comportent également un substrat et une couche compacte de diamant rendu conducteur par un dopant et recouvrant le substrat.

Le matériau formant le substrat peut être choisi parmi le silicium et le carbure de silicium, tous deux rendus conducteurs par dopage, la quartz et le verre. Il peut être aussi un métal réfractaire de transition choisi, de préférence, parmi le zirconium, le molybdène, le tantale, le niobium, le titane et leurs siliciures.

De préférence, le dopant utilisé pour rendre le diamant conducteur est du bore, de l'azote ou un mélange des deux. La couche de diamant a, par ailleurs, une épaisseur de 0,1 à 1 µm.

La cellule selon l'invention peut soit comporter une électrode bipolaire sous la forme d'une plaque soit une pluralité d'électrodes bipolaires sous la forme de billes.

D'autres caractéristiques de l'invention ressortiront de la description qui va suivre, faite en regard du dessin annexé, dans lequel:
- la figure 1 représente une cellule d'électrolyse comportant des électrodes bipolaires formées de plaques;
- la figure 2 représente une cellule d'électrolyse comportant des électrodes bipolaires sous forme de billes en suspension, et
- la figure 3 montre, en coupe, l'une des billes de la figure 2.

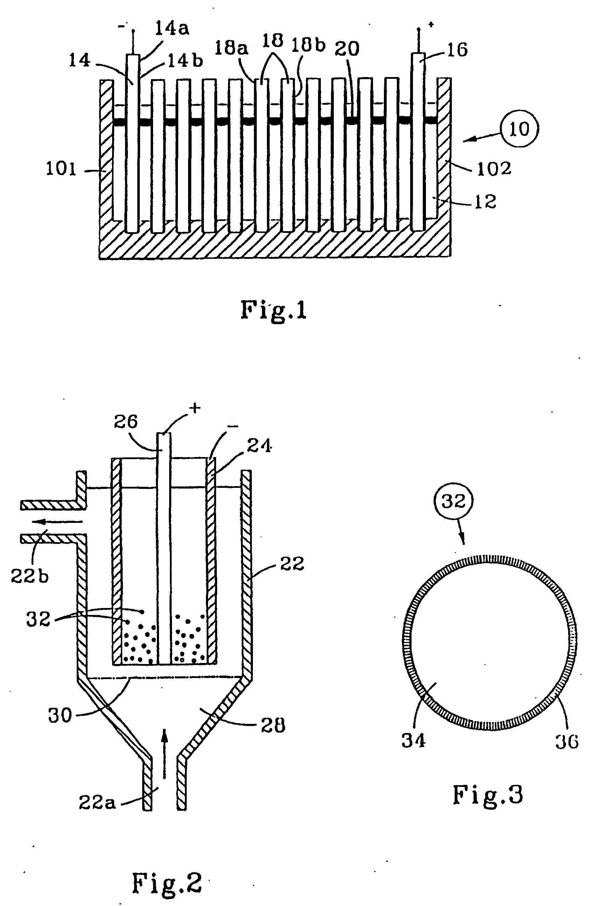

Sur la figure 1, on peut voir, en coupe, une cellule d'électrolyse qui comporte un bac rectangulaire 10 en matériau isolant, contenant un électrolyte 12. Il comprend deux parois d'extrémité 101 et 102, au voisinage desquelles sont disposées respectivement une anode 14 et une cathode 16 se présentant sous la forme de plaques parallèles entre elles.

Plusieurs électrodes bipolaires 18, également formées de plaques, sont interposées, à intervalles réguliers, dans l'espace compris entre l'anode et la cathode, parallèlement à elles.

Bien entendu, l'anode 14, la cathode 16 et les électrodes bipolaires 18 ne doivent pas être en contact les unes avec les autres. Des cales 20 en matériau isolant sont donc interposées entre elles à cet effet.

Dans le cas d'une cellule d'électrolyse destinée à la purification d'eau usée, celle-ci forme l'électrolyte et traverse la bac 10. Les conduites permettant cette circulation ne sont pas représentées.

Selon la présente invention, tant l'anode 14 et la cathode 16 que les électrodes bipolaires 18 sont formées d'un substrat électriquement conducteur, portant la référence a, revêtu sur ses deux faces, au moins dans sa partie immergée, d'une couche b de diamant dopé pour être électriquement conducteur.

Le substrat peut être formé d'une plaque de silicium ou de carbure de silicium qui, tous les deux, ont été dopés, par des procédés connus de l'homme du métier, de manière à réduire leur résistivité à une valeur qui, typiquement, est de l'ordre de 1 à 3 mΩcm. Le substrat peut également être formé de carbone vitreux ou d'un matériau composite comportant un réseau de fibres de carbone amalgamé avec du carbone pyrolitique et/ou du carbure de silicium.

Le substrat peut être aussi une plaque de métal, de préférence un métal réfractaire de transition, avantageusement choisi parmi le zirconium, le' molybdène, le tantale, le niobium, le titane et leurs siliciures.

Quel qu'il soit, le substrat conducteur doit initialement porter des particules de diamant formant des germes de croissance pour la couche de diamant qui est formée à sa surface, selon un procédé connu, par HFCVD (hot filament chemical vapor deposition) dans une enceinte à une température comprise entre 600 et 900°C. Le diamant est rendu conducteur par dopage à l'aide de bore, d'azote ou d'un mélange des deux, qui est introduit durant l'opération de dépôt de la couche sous la forme de gaz triméthylebore (TMB), d'ammoniaque ou de toute autre substance (phosphore, carbone) ayant le même effet.

Le procédé décrit ci-dessus permet de réaliser des anodes, cathodes et électrodes bipolaires recouvertes sur leurs deux faces d'un film de diamant à structure polycristalline compacte, dont la résistivité est inférieure ou égale à 0,2 Ωcm, pour une concentration en bore de 3500 ppm environ. L'épaisseur de cette couche conductrice de diamant dopé est, typiquement, comprise entre 0,1 et 1 µm.

Pour plus de détails sur la fabrication de telles électrodes, on se référera à l'article intitulé "Diamond electrodes and microelectrodes" de A. Perret et al., paru dans Electrochemical Society Proceedings, Volume 97-32.

En variante, les faces externes de l'anode 14 et de la cathode 16 (c'est à dire celles qui sont en regard des extrémités 101 et 102 du bac) peuvent être également revêtues d'une couche de diamant.

Selon une autre variante, seules les électrodes bipolaires sont réalisées comme indiqué ci-dessus, l'anode et la cathode étant alors en un matériau conducteur, tel que du silicium, du carbure de silicium, du graphite, du carbone vitreux, un matériau composite à base de fibres de carbone, comme mentionné précédemment, ou encore du tantale, du titane, du zirconium, du niobium, du molybdène ou leurs siliciures.

La figure 2 montre un autre type de cellule d'électrolyse utilisant des électrodes bipolaires sous forme de billes, selon la structure décrite dans la publication de M. Fleischmann, déjà citée. Cette cellule comporte un bac cylindrique 22 à l'intérieur contenant une anode tubulaire 24 et une cathode en forme de tige 26 disposée selon l'axe de l'anode. L'anode 24 et la cathode 26 sont, mise à part leur forme, et donc pour ce qui concerne le substrat et la couche de diamant qui les constituent, identiques aux électrodes 14 et 16 décrites dans le mode de réalisation de la figure 1.

Le bac 22 comporte, à sa base, une entrée 22a et, à sa partie supérieure, une sortie 22b, respectivement destinées à faire pénétrer et sortir une solution d'électrolyte 28. Une membrane 30 est placée dans la partie inférieure du bac, sous les deux électrodes et au-dessus de l'entrée 22a. Elle présente une structure poreuse, de manière à laisser passer l'électrolyte lorsqu'il remonte de l'entrée 22a vers la sortie 22b. Des électrodes bipolaires 32, formées d'une pluralité de particules sphériques maintenues en suspension dans l'électrolyte, selon l'enseignement de la publication de M. Fleischmann, sont disposées dans l'espace situé au-dessus de la membrane. Leur diamètre est, typiquement, compris entre 0,5 et 10 mm. La structure de la membrane est choisie pour que ces billes ne puissent pas la traverser.

Comme le montre la figure 3, chaque électrode bipolaire 32 comporte un noyau sphérique 34, avantageusement en silicium ou carbure de silicium dopé, par des procédés connus de l'homme du métier, afin de réduire sa résistivité à une valeur de l'ordre de 1 à 3 mΩcm. La bille ainsi rendue conductrice est totalement recouverte d'une couche 36 de diamant conducteur dopé au bore ayant, typiquement, une épaisseur de l'ordre de 0,1 à 1 µm. Comme indiqué à propos de la réalisation des électrodes de la figure 1, le dopage au bore est réalisé à l'aide de gaz triméthylebore (TMB) ou d'ammoniaque introduit dans l'enceinte HFCVD durant l'opération de dépôt du diamant. Comme déjà mentionné, d'autres dopants, tels que l'azote, le phosphore ou le carbone, peuvent être utilisés pour rendre le diamant électriquement conducteur. Cette couche présente une structure polycristalline compacte, de sorte que le noyau 34 est totalement protégé.

La fabrication de billes en carbure de silicium revêtu de diamant est connue pour des applications dans des roulements à billes. Pour plus de détails, on se référera, par exemple, à la publication de M. Drory et al. Intitulée « Microstructural effects on the performance of CVD diamond coatings for bearing applications » à la 2^{nd} Intemational Conférence on the applications of Diamond Films and Related Materials », tenue à Tokyo en 1993.

Des électrodes bipolaires sphériques ainsi obtenues permettent d'éviter une usure et une pollution, du seul fait qu'elles sont recouvertes d'une couche de diamant.

Le carbure de silicium dopé est choisi, selon l'invention, pour constituer le noyau des électrodes bipolaires, en raison de sa faible densité qui permet à ces billes 32 de rester en suspension dans l'électrolyte lorsque celui-ci remonte dans le bac. En variante, le noyau 34 des sphères peut cependant être en silicium dopé, en oxyde de silicium, en quartz, en graphite ou en métal réfractaire de transition et, plus particulièrement, le zirconium, le molybdène, le tantale, le niobium le titane ou leurs siliciures.

## Revendications

1. Cellule d'électrolyse comportant une anode (14), une cathode (16) et au moins une électrode bipolaire (18) disposée entre l'anode et la cathode, **caractérisée en ce que** ladite électrode bipolaire comporte un substrat et une couche compacte de diamant rendu conducteur par un dopant et recouvrant ledit substrat.

2. Cellule d'électrolyse selon la revendication 1, **caractérisée en ce que** l'anode et la cathode comportent également un substrat et une couche compacte de diamant conducteur recouvrant ledit substrat.

3. Cellule d'électrolyse selon l'une des revendications 1 et 2, **caractérisée en ce que** le matériau formant ledit substrat est choisi parmi le silicium, le carbure de silicium, tous deux rendus conducteurs par dopage, le quartz, le graphite, le carbone vitreux et un matériau composite comportant un réseau de fibres de carbone amalgamé avec du carbone pyrolitique et/ou du carbure de silicium.

4. Cellule d'électrolyse selon l'une des revendications 1 et 2, **caractérisée en ce que** le matériau formant ledit substrat est un métal réfractaire de transition.

5. Cellule d'électrolyse selon la revendication 4, **caractérisée en ce que** ledit métal de transition est choisi parmi le zirconium, le molybdène, le tantale, le niobium, le titane et leurs siliciures.

6. Cellule d'électrolyse selon l'une des revendications 1 à 5, **caractérisée en ce que** dopant du diamant est choisi parmi le bore, l'azote, un mélange de bore et d'azote, le phosphore et le carbone.

7. Cellule d'électrolyse selon l'une des revendications 1 à 6, **caractérisée en ce que** la couche de diamant a une épaisseur comprise entre 0,1 et 1 µm.

8. Cellule d'électrolyse selon l'une des revendications 1 à 7, **caractérisée en ce que** ladite électrode bipolaire est sous la forme d'une plaque.

9. Cellule d'électrolyse selon l'une des revendications 1 à 7, **caractérisée en ce qu'**elle comporte une pluralité d'électrodes bipolaires sous la forme de billes.

## Patentansprüche

1. Elektrolysezelle, die eine Anode (14), eine Kathode (16) und mindestens eine zwischen der Anode und der Kathode angeordnete bipolare Elektrode (18) umfasst, **dadurch gekennzeichnet, dass** die besagte bipolare Elektrode ein Substrat und eine kompakte, durch einen Dotierstoff leitfähig gemachte Diamantschicht umfasst, die das besagte Substrat bedeckt.

2. Elektrolysezelle nach Anspruch 1, **dadurch gekennzeichnet, dass** die Anode und die Kathode ebenfalls ein Substrat und eine kompakte leitfähige Diamantschicht umfasst, die das besagte Substrat bedeckt.

3. Elektrolysezelle nach einem der Ansprüche 1 und 2, **dadurch gekennzeichnet, dass** das Material, aus dem das besagte Substrat gebildet wird, wahlweise Silizium, Siliziumkarbid, beide durch Dotierung leitend gemacht, Quarz, Graphit, glasiger Kohlenstoff oder ein Verbundstoff aus einem Amalgam von vemetzten Kohlenstofffasem und pyrolytischem Kohlenstoff und/oder Siliziumkarbid ist.

4. Elektrolysezelle nach einem der Ansprüche 1 und 2, **dadurch gekennzeichnet, dass** das Material, aus dem das besagte Substrat besteht, ein hitzebeständiges Übergangsmetall ist.

5. Elektrolysezelle nach Anspruch 4, **dadurch gekennzeichnet, dass** das besagte Übergangsmetall wahlweise Zirkonium, Molybdän, Tantal, Niobium, Titan oder ein Silizid eines derselben ist.

6. Elektrolysezelle nach einem der Ansprüche 1 bis 5, **dadurch gekennzeichnet, dass** der Dotierungsstoff des Diamanten wahlweise Bor, Stickstoff, eine Mischung aus Bor und Stickstoff, Phosphor oder Kohlenstoff ist.

7. Elektrolysezelle nach einem der Ansprüche 1 bis 6, **dadurch gekennzeichnet, dass** die Diamantschicht eine zwischen 0,1 und 1 µm liegende Dicke aufweist.

8. Elektrolysezelle nach einem der Ansprüche 1 bis 7, **dadurch gekennzeichnet, dass** die besagte bipolare Elektrode plattenförmig ist.

9. Elektrolysezelle nach einem der Ansprüche 1 bis 7, **dadurch gekennzeichnet, dass** sie eine Mehrzahl von kugelförmigen bipolaren Elektroden umfasst.

## Claims

1. Electrolytic cell including an anode, a cathode and at least one bipolar electrode arranged between the anode and the cathode, **characterised in that** said bipolar electrode includes a substrate and a compact diamond film which is made conductive by a doping agent and which coats said substrate.

2. Electrolytic cell according to claim 1, **characterised in that** the anode and the cathode also include a substrate and a compact conductive diamond film coating said substrate.

3. Electrolytic cell according to claims 1 or 2, **characterised in that** the material forming said substrate is selected from among silicon, silicon carbide, both made conductive by doping, quartz, vitreous carbon and a composite material including a network of carbon fibres amalgamated with pyrolitic carbon and/or silicon carbide.

4. Electrolytic cell according to claims 1 or 2, **characterised in that** the material forming said substrate is a refractory transition metal.

5. Electrolytic cell according to claim 4, **characterised in that** said transition metal is selected from among zirconium, molybdenum, tantalum, niobium, titanium and silicides thereof.

6. Electrolytic cell according to any of claims 1 to 5, **characterised in that** the diamond doping agent is boron or nitrogen or a mixing of boron and nitrogen or phosphorus or carbon.

7. Electrolytic cell according to any of claims 1 to 6, **characterised in that** the diamond film has a thickness comprised between 0.1 and 1 µm.

8. Electrolytic cell according to any of claims 1 to 7, **characterised in that** it includes a bipolar electrode in the form of a plate.

9. Electrolytic cell according to any of claims 1 to 7, **characterised in that** it includes a plurality of bipolar electrodes in the form of balls.
